# EUROPEAN PATENT APPLICATION

(11) **EP 4 194 610 A1**
(43) Date of publication of application: **14.06.2023**
(21) Application number: 21855929.2
(22) Date of filing: 05.08.2021
(51) Int. Cl.: E01H 1/08, G05D 1/02, G08G 1/00

(54) **WORK METHOD AND WORK SYSTEM**

(30) Priority: 08.08.2020 JP 2020135446
(71) Applicant: Aichi Steel Corporation, Tokai-shi, Aichi 476-8666 (JP)
(72) Inventor: YAMAMOTO, Michiharu, Tokai-shi, Aichi 476-8666 (JP); NAGAO, Tomohiko, Tokai-shi, Aichi 476-8666 (JP); AOYAMA, Hitoshi, Tokai-shi, Aichi 476-8666 (JP)
(74) Representative: Viering, Jentschura & Partner mbB Patent- und Rechtsanwälte
(86) International application number: PCT/JP2021/029096
(87) International publication number: WO 2022/034850

(57) **Abstract**

A work system (1) including a work vehicle (11) which, as moving on a road (1R) where magnetic markers (10) are laid, detects the magnetic marker (10) to conduct work of preparation, maintenance, or management of the road (1R) has a control unit (13) which identifies a relative position of the work vehicle (11) with respect to the magnetic marker (10) and identifies a point to be worked on by the work vehicle (11) based on the relative position. With the work vehicle (11) conducting work at the point identified by the control unit (13), work regarding the traveling road where the magnetic markers are laid can be efficiently conducted.

## Description

### TECHNICAL FIELD

The present invention relates to a work method and a work system for conducting work such as traveling road maintenance.

### BACKGROUND ART

On a traveling road such as a road where vehicles pass, guardrails, curbstones, plants, and so forth are provided beside a lane where vehicles travel. On a road surface where vehicles travel, a print such as a lane mark (white line, division line) for dividing a lane, a print forming a road sign, and so forth are provided. Also, there is an intersection where a rivet which reflects light from the headlights of a vehicle is driven into the road surface.

To sufficiently ensure safety when vehicles pass, it is required to retain the traveling road in a favorable state. Thus, it is required to regularly conduct work of cleaning the traveling road and checking the state of the traveling road. If repairs are needed, it is required to conduct repair work immediately. Thus, a road cleaning apparatus for road cleaning has also been suggested (for example, refer to Patent Literature 1) .

### CITATION LIST

### PATENT LITERATURE

Patent Literature 1: Japanese Unexamined Patent Application Publication No. 2009-7823

### SUMMARY OF INVENTION

### TECHNICAL PROBLEM

Work regarding the traveling road such as preparation, maintenance, or management of the traveling road includes work requiring traffic restriction for vehicles. Thus, a method and system of efficiently conducting work regarding the traveling road have been desired.

The present invention is to provide a work method and work system for efficiently conducting work regarding a traveling road where magnetic markers are laid.

### SOLUTION TO PROBLEM

One mode of the present invention resides in a work method for an apparatus which, as moving on a traveling road where a magnetic marker is laid, detects the magnetic marker to conduct work of preparation, maintenance, or management of the traveling road, wherein
a relative position of the apparatus with respect to the magnetic marker is identified,
based on the relative position, a point to be worked on by the apparatus is identified, and
at the point identified, the apparatus conducts work.

One mode of the present invention resides in a work system including an apparatus which, as moving on a traveling road where a magnetic marker is laid, detects the magnetic marker, the apparatus conducting work of preparation, maintenance, or management of the traveling road, the system having:
a position identifying part which identifies a relative position of the apparatus with respect to the magnetic marker; and
a work point identifying part which identifies a point to be worked on by the apparatus based on the relative position, wherein
the apparatus is configured to conduct work at the point identified by the work point identifying part.

### Advantageous Effects of Invention

In the present invention, based on the relative position of the apparatus with respect to the magnetic marker, a point to be worked on by the apparatus is identified. At the point identified as such, the apparatus conducts work.

The magnetic marker is fixed to the traveling road, and the possibility of positional change is small. By using the magnetic marker with less positional change, the work point can be identified with high accuracy, and the apparatus can efficiently conduct work.

As described above, the work method and work system according to the present invention is a method or system in which work regarding the traveling road can be efficiently conducted.

### BRIEF DESCRIPTION OF DRAWINGS

FIG. 1 is a descriptive diagram of a work vehicle on a lane viewed downward in a first embodiment.
FIG. 2 is a descriptive diagram depicting the work vehicle on the lane viewed sideward in the first embodiment.
FIG. 3 is a block diagram depicting the configuration of the work vehicle in the first embodiment.
FIG. 4 is a descriptive diagram exemplarily depicting temporal changes of a magnetic measurement value in a forwarding direction at the time of passing over a magnetic marker in the first embodiment.
FIG. 5 is a descriptive diagram exemplarily depicting a distribution of magnetic measurement values in a vehicle-width direction by magnetic sensors Cn arrayed in the vehicle-width direction in the first embodiment.
FIG. 6 is a flow diagram of automatic traveling control in the first embodiment.
FIG. 7 is a flow diagram of marker inspection in the first embodiment.
FIG. 8 is a descriptive diagram exemplarily depicting a distribution of magnetic measurement values in a vertical direction by magnetic sensors Cn arrayed in the vehicle-width direction when a magnetic marker is detected in the first embodiment.
FIG. 9 is a descriptive diagram of a state of inspection (second inspection) of a magnetic marker laying state in the first embodiment.
FIG. 10 is a descriptive diagram of a relative position of the work vehicle after magnetic marker detection in the first embodiment.
FIG. 11 is a descriptive diagram of a work vehicle on a lane viewed downward in a second embodiment.

### DESCRIPTION OF EMBODIMENTS

Embodiments of the present invention are specifically described by using the following embodiments.

### (FIRST EMBODIMENT)

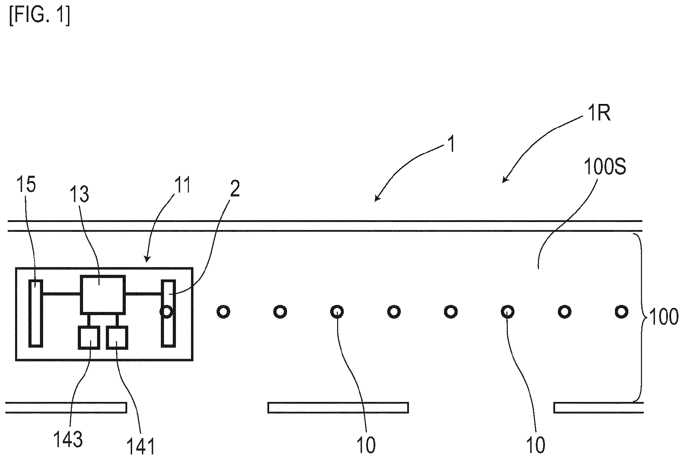

The present embodiment is an example regarding a work method and work system 1 for inspecting magnetic marker 10 on road (one example of traveling road) 1R where magnetic markers 10 are laid. Details of this are described with reference to FIG. 1 to FIG. 10.

Magnetic marker 10 is, as depicted in FIG. 1, a marker for roads laid on road surface 100S. Magnetic marker 10 forms a magnetic field on its periphery, and thus can be magnetically detected. Magnetic markers 10 are arranged with, for example, 2-meter pitches, along the center of lane 100, which is sectioned by left and right lane marks. Magnetic marker 10 is one example of attachments (accessories of road 1R) configuring the road.

Magnetic marker 10 is formed of a flat circular magnet sheet having a diameter of 100 mm and a thickness of 2 mm. The magnet sheet is an isotropic ferrite rubber magnet having a maximum energy product (BHmax) of approximately 6.4 kJ/m³. Magnetic marker 10 has magnetic flux density Gs of the surface on the order of 45 mT or smaller. Magnetic marker 10 can be bonded and jointed to, for example, road surface 100S. As a bonding agent, for example, asphalt in a molten state or a softened state may be used.

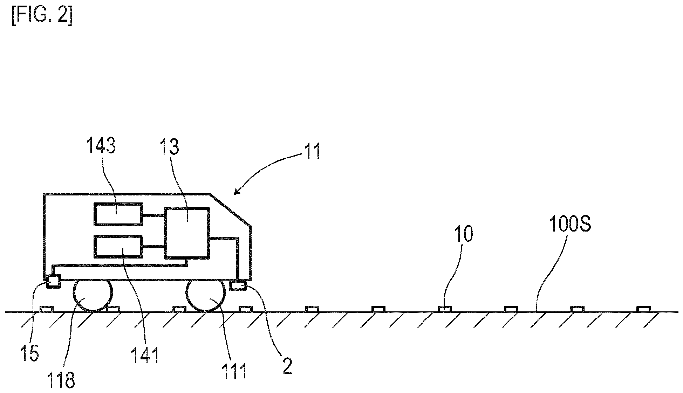

Work system 1 is configured to include work vehicle 11 forming one example of an apparatus. Work vehicle 11 (FIG. 2) is a vehicle which includes a steered wheel 111 and a driving wheel 118 and is capable of performing automatic traveling control including control of a steering angle indicating an orientation of the steered wheel 111. Work vehicle 11 includes sensor array 2 which detects magnetism, control unit 13, steering actuator 141, throttle actuator 143, inspection unit 15, and so forth.

Steering actuator 141 is an actuator which steers steered wheel 111. By controlling steering actuator 141, the course of work vehicle 11 can be changed in accordance with steering of steered wheel 111. Throttle actuator 143 is an actuator for opening and closing (controlling) an engine throttle. By controlling throttle actuator 143, engine output can be changed, and the speed of work vehicle 11 can be adjusted. Steering actuator 141 and throttle actuator 143 can be controlled by control unit 13.

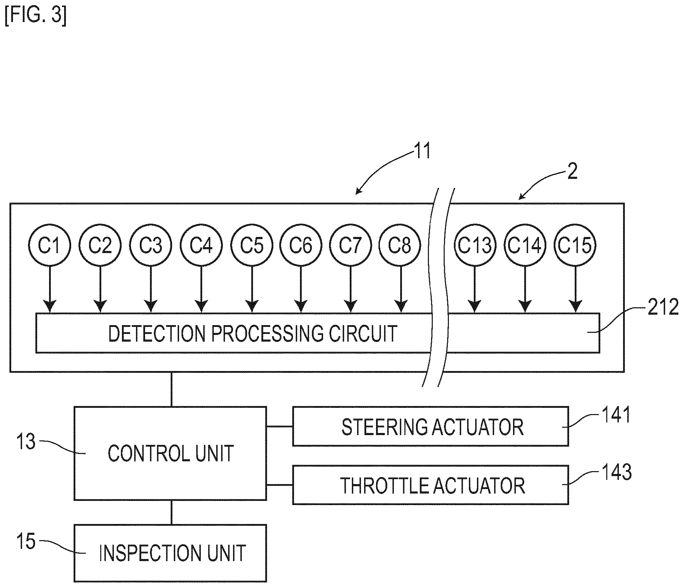

Sensor array 2 is, as in FIG. 3, a magnetic measurement unit in which a plurality of magnetic sensors Cn are arrayed on a straight line. Sensor array 2 includes fifteen magnetic sensors Cn (n is an integer from 1 to 15) with 0.1-meter pitches along a longitudinal direction and detection processing circuit 212 which performs magnetic measurement process and so forth. Sensor array 2 is attached to work vehicle 11 (FIG. 1) so that the arraying direction of fifteen magnetic sensors Cn (n=1 to 15) are along the vehicle-width direction and center magnetic sensor C8 is positioned on a center line of the vehicle (center in the vehicle-width direction).

Magnetic sensors Cn are sensors which detect magnetism by using the known MI effect (Magnet Impedance Effect) in which the impedance of a magneto-sensitive body such as an amorphous wire not depicted sensitively changes in response to the external magnetic field. In magnetic sensors Cn, magneto-sensitive bodies are arranged along orthogonal three axis directions, and magnetism acting on these three axis directions can be detected. In a state of being attached to work vehicle 11, sensor array 2 of the present embodiment detects magnetic components in a longitudinal direction (forwarding direction), the vehicle-width direction, and the vertical direction.

Detection processing circuit 212 is a circuit which performs marker detection process described below for detecting magnetic marker 10, and so forth. This detection processing circuit 212 is configured by using, in addition to a CPU (central processing unit) which performs various calculations, memory elements such as a ROM (read only memory) and RAM (random access memory), and so forth. Detection processing circuit 212 outputs, in addition to the result of detection of magnetic marker 10, one-dimensional magnetic distribution data, which is a distribution of magnetic measurement values of the respective magnetic sensors Cn. As one-dimensional magnetic distribution data, there are distribution data of magnetic intensity acting in the longitudinal direction, distribution data of magnetic intensity acting in the vehicle-width direction, and distribution data of magnetism acting in the vertical direction.

Control unit 13 is a unit which performs traveling control of work vehicle 11 and performs inspection of magnetic marker 10. Control unit 13 is configured to include an electronic substrate having electronic components such as a CPU, ROM, and RAM implemented thereon, a storage device such as a HDD (hard disk drive) device or SSD (solid state drive) device, and so forth. In control unit 13, a control program read from the ROM or the like is processed by the CPU, thereby achieving a function defined in advance.

Control unit 13 controls steering actuator 141 and throttle actuator 143, thereby causing work vehicle 11 to automatically travel. Also, control unit 13 inspects magnetic marker 10 by using inspection unit 15 and sensor array 2. Control unit 13 acquires the above-described one-dimensional magnetic distribution data of three types outputted by sensor array 2, and stores them over a predetermined previous period of time.

Inspection unit 15 is a unit which inspects a laying sate of magnetic marker 10. Inspection unit 15 outputs peel-off information indicating whether magnetic marker 10 is peeling off from road surface 100S. In work vehicle 11, inspection unit 15 is arranged 5 meters away rearward from sensor array 2.

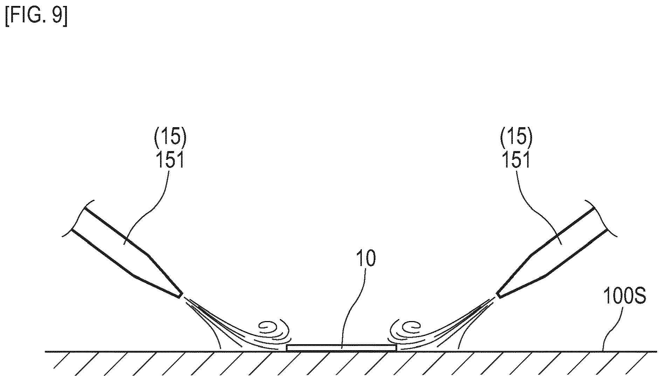

Inspection unit 15 is configured to include air nozzles 151 (refer to FIG. 9) which blow compressed air to road surface 100S, an image-taking camera (omitted in the drawing) which takes an image of magnetic marker 10, a sound-collection microphone (omitted in the drawing), and a processing part. A plurality of air nozzles 151 are provided in the vehicle-width direction so as to be able to inject compressed air to each position in the vehicle-width direction. One or plurality of image-taking cameras and sound-collection microphones are provided so as to correspond to almost an entire area of work vehicle 11 in the vehicle-width direction.

The processing part is a circuit which determines whether magnetic marker 10 is peeling off (one example of the laying state). The processing part detects peel-off by detecting a flutter of a peeled-off point that can occur when compressed air is blown to magnetic marker 10 where peel-off occurs. The processing part processes taken-image data (moving image) and sound data when compressed air is blown to detect a flutter at the peeled-off point or a sound tapping on road surface 100S with a flutter. When magnetic marker 10 is peeling off, a flutter occurs at an edge portion of magnetic marker 10 in response to blowing of compressed air. In taken-image data by the image-taking camera during fluttering, an image blur occurs at the edge portion of magnetic marker 10. By detecting this image blur, the processing part determines whether magnetic marker 10 is peeling off. When magnetic marker 10 is peeling off, a flutter occurs at the edge portion of magnetic marker 10 in response to blowing of compressed air. In sound data by the sound-collection microphone during fluttering, a sound when the edge portion of magnetic marker 10 taps on the road surface is included. By detecting a sound when the edge portion of magnetic marker 10 taps on the road surface, the processing part determines whether magnetic marker 10 is peeling off. As a sound detection method, there are a method of detecting frequency components when magnetic marker 10 taps on the road surface, and so forth.

In work system 1 of the present embodiment configured as described above, work vehicle 11 automatically travels along lane 100 as detecting magnetic marker 10, and performs inspection of each magnetic marker 10 during traveling. In the following, (A) marker detection process, (B) automatic traveling control, and (C) marker inspection are sequentially described.

### (A) Marker Detection Process

The marker detection process is a process to be performed by sensor array 2. Sensor array 2 performs the marker detection process by using magnetic sensors Cn with a frequency of 3 kHz. Detection processing circuit 212 of sensor array 2 acquires magnetic measurement values measured simultaneously by fifteen magnetic sensors Cn to perform marker detection process. When detecting magnetic marker 10, sensor array 2 inputs an indication of detection and a lateral shift amount (relative position) with respect to magnetic marker 10 to control unit 13 as a result of the marker detection process. The lateral shift amount is a deviation of magnetic sensor C8 positioned at the center of sensor array 2 with respect to magnetic marker 10 in the vehicle-width direction, as described further below.

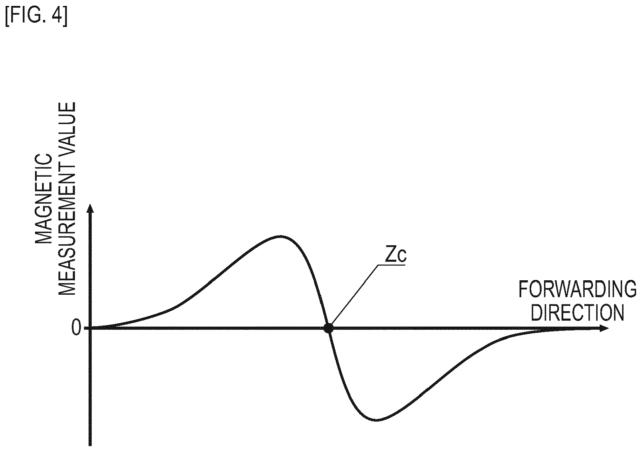

As described above, magnetic sensors Cn can measure magnetic components of work vehicle 11 in the longitudinal direction and the vehicle-width direction. For example, when these magnetic sensors Cn move in the longitudinal direction to pass directly above any magnetic marker 10, the magnetic measurement value in the longitudinal direction has its sign reversed before and after magnetic marker 10 as in FIG. 4, and temporally changes so as to cross zero at a position directly above magnetic marker 10. While work vehicle 11 is traveling, when zero-cross Zc occurs in which the sign of the magnetic measurement value in the longitudinal direction detected by any magnetic sensor Cn is reversed, it can be determined that sensor array 2 is positioned directly above magnetic marker 10. In this manner, when sensor array 2 is positioned directly above magnetic marker 10 and zero-cross of the magnetic measurement value in the longitudinal direction occurs, detection processing circuit 212 determines that magnetic marker 10 is detected.

Also, for example, as for a magnetic sensor with the same specification as that of magnetic sensors Cn, assume a movement along a virtual line in the vehicle-width direction passing directly above magnetic marker 10. In this case, the magnetic measurement value in the vehicle-width direction has its sign reversed on both sides across magnetic marker 10 and changes so as to cross zero at a position directly above magnetic marker 10. Therefore, in sensor array 2 having fifteen magnetic sensors Cn arrayed in the vehicle-width direction, the sign of the magnetic measurement value in the vehicle-width direction to be detected by magnetic sensor Cn differs depending on which side the magnetic sensor is present with respect to magnetic marker 10.

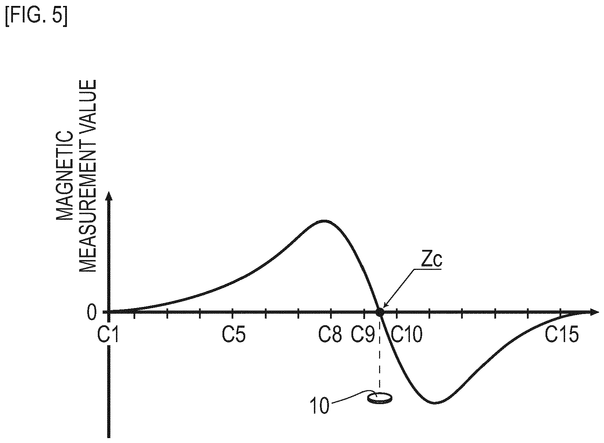

In a distribution of FIG. 5 exemplarily depicting magnetic measurement values in the vehicle-width direction of each magnetic sensor Cn, zero-cross Zc where the sign of the magnetic measurement value in the vehicle-width direction is reversed appears so as to correspond to magnetic marker 10. The position of zero-cross Zc in the drawing matches the position of magnetic marker 10 in the vehicle-width direction. The position of magnetic marker 10 in the vehicle-width direction can be identified as, for example, an intermediate position between adjacent two magnetic sensors Cn across zero-cross Zc or a position directly below magnetic sensor Cn where the magnetic measurement value in the vehicle-width direction is zero and the signs of magnetic sensors Cn on both outer sides are reversed.

Detection processing circuit 212 measures a deviation of a representative point of work vehicle 11 with respect to magnetic marker 10 in the vehicle-width direction as a lateral shift amount. In the present embodiment, the position of magnetic sensor C8 at the center of sensor array 2, that is, the center of work vehicle 11 in the vehicle-width direction, is set as a representative point. For example, in FIG. 5, the position of zero-cross Zc corresponding to magnetic marker 10 is a position corresponding to C9.5, which is approximately a midpoint between C9 and C10. As described above, since a space between magnetic sensors C9 and C10 is ten centimeters, the lateral shift amount of the representative point (magnetic sensor C8) of work vehicle 11 with respect to magnetic marker 10 is (9.5-8)×10=15 centimeters. The example in the drawing is an example when work vehicle 11 is shifted to left in lane 100. As for the sign of the lateral shift amount, the sign is positive when the representative point of work vehicle 11 is shifted to left with respect to magnetic marker 10, and the sign is negative when it is shifted to right.

### (B) Automatic Traveling Control

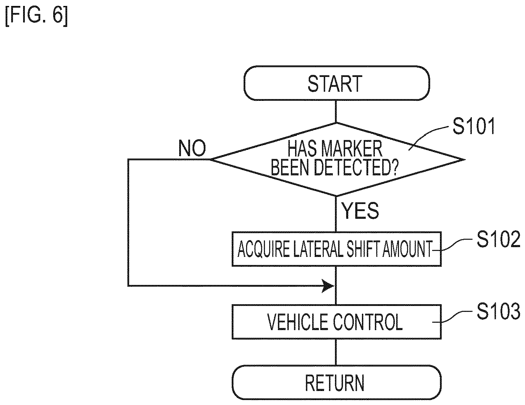

As in FIG. 6, when a magnetic marker is detected (S101: YES), control unit 13 acquires a lateral shift amount (relative position with respect to magnetic marker 10) outputted from sensor array 2 (S102). Control unit 13 performs vehicle control so that the lateral shift amount is closer to a predetermined value such as zero (S103). By this control, control unit 13 as one example of a control part causes work vehicle 11 to automatically travel along lane 100 (FIG. 1).

In vehicle control at step S103 of FIG. 6, when the lateral shift amount is positive, that is, when work vehicle 11 is shifted to left with respect to magnetic marker 10, control unit 13 controls steering actuator 141 so that steered wheel 111 is steered to right. Also, for example, control unit 13 controls throttle actuator 143 in accordance with the steering amount. For example, when the steering amount is large, control unit 13 controls throttle actuator 143 so as to suppress the vehicle speed. By the above-described control by control unit 13, work vehicle 11 can automatically travel along lane 100 as adjusting the speed.

### (C) Marker Inspection

Control unit 13 performs three types of inspection, which are examples of work. First and second inspections are inspections regarding magnetic marker 10 detected by sensor array 2. A third inspection is an inspection regarding magnetic marker 10 predicted to be detected by sensor array 2. Control unit 13 makes a determination that magnetic marker 10 passing all of the first to third inspections is in a favorable state. The result of inspection by control unit 13 is recorded as occasion arises on a storage area of the storage device (control unit 13). Work vehicle 11 forming one example of the apparatus may include a position measuring circuit which measures a position and a circuit which records the result acquired by conducting work of inspecting magnetic marker 10 as one example of the attachment as being linked to the position acquired by the position measuring circuit. The result of inspection representing whether magnetic marker 10 is in a favorable state is preferably recorded on the circuit as being linked to position measurement information by position measuring means (one example of position measuring circuit) such as GPS (Global Positioning System) not depicted. As this circuit, a storage device such as an HDD (hard disk drive) device or SSD (solid state drive) device can be used.

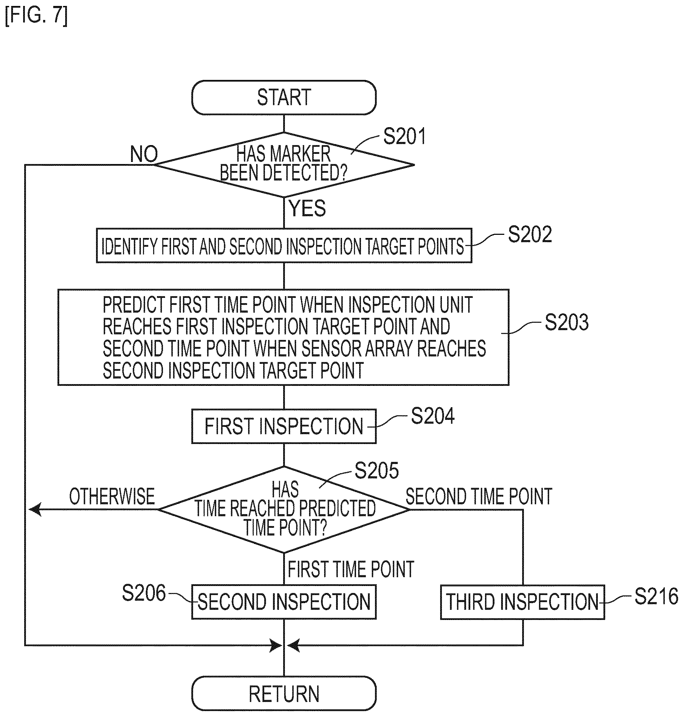

When magnetic marker 10 is detected by sensor array 2 (S201 of FIG. 7: YES), control unit 13 identifies a relative position (positional shift) with respect to magnetic marker 10 for work vehicle 11 as one example of the apparatus (position identifying part). Then, control unit 13 uses the relative position with respect to the detected magnetic marker 10 to identify first and second inspection target points (S202, work point identifying part). The first inspection target point is a target point for the above-described first and second inspection, and a point where magnetic marker 10 detected at step S201 is laid. The second inspection target point is a target point for the above-described third inspection. The second inspection target point is a point where undetected magnetic marker 10 adjacent in the forwarding direction ahead to magnetic marker 10 detected at step S201 is laid. In the following, the first to third inspections are sequentially described with reference to a flow diagram of FIG. 7.

### (First Inspection)

When magnetic marker 10 is detected (S201: YES), control unit 13 identifies relative positions of work vehicle 11 in the longitudinal direction and the vehicle-width direction with respect to magnetic marker 10 as a representative point of work vehicle 11 at the center (position of magnetic sensor C8) of sensor array 2 (position identifying part). When magnetic marker 10 is detected, a positional shift (relative position) of work vehicle 11 in the longitudinal direction with respect to that magnetic marker 10 is identified as zero. Also, the lateral shift amount acquired from sensor array 2 is identified as a positional shift (relative position) of work vehicle 11 in the vehicle-width direction with respect to magnetic marker 10.

Control unit 13 identifies a position directly below sensor array 2 in the longitudinal direction and shifted by the lateral shift amount from the center of sensor array 2 in the vehicle-width direction, that is, the laying point of detected magnetic marker 10, as a first inspection target point (S202), and performs the first inspection (S204).

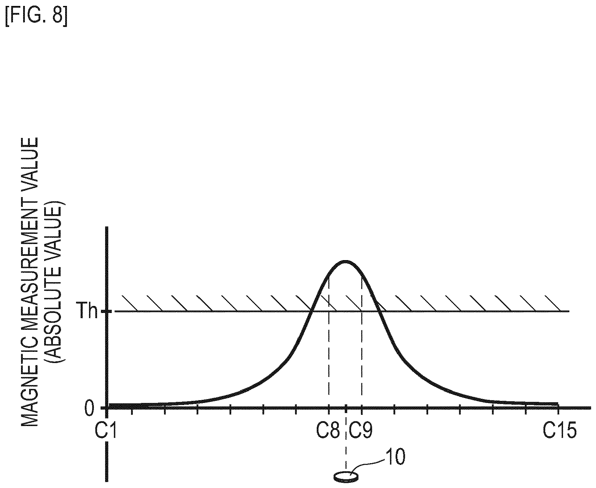

Control unit 13 performing the first inspection reads from the storage area the one-dimensional magnetic distribution data outputted by the sensor array 2 in a state of facing the laying point of magnetic marker 10 as a first inspection target point. The one-dimensional magnetic distribution data to be read is preferably distribution data of magnetic intensity in the vertical direction. Control unit 13 performs threshold process on this one-dimensional magnetic distribution data (refer to FIG. 8). The threshold process is a process of determining whether the magnitude of the magnetic measurement value (absolute value) at the position directly above magnetic marker 10 (first inspection target point) in the one-dimensional magnetic distribution data exceeds predefined magnetic intensity (threshold Th). When the magnitude of the magnetic measurement value (absolute value) at the position directly above magnetic marker 10 exceeds threshold Th, control unit 13 determines that the magnetic characteristics of magnetic marker 10 are favorable. On the other hand, when the magnitude is less than threshold Th, it is determined that the magnetic characteristics of magnetic marker 10 are not favorable. The one-dimensional magnetic distribution exemplarily depicted in FIG. 8 is an example in which it is determined that the magnetic characteristics are favorable.

### (Second Inspection)

The second inspection is an inspection of the laying state of magnetic marker 10, such as peel-off from road surface 100S (refer to FIG. 2). Control unit 13 predicts a time point when inspection unit 15 reaches the first inspection target point (the laying point of magnetic marker 10 detected at S201) identified at the above step S202 (FIG. 7) (S203) . Specifically, based on the vehicle speed and the steering angle, control unit 13 predicts a first time point when inspection unit 15 reaches the laying point of magnetic marker 10 as the first inspection target point and the position of magnetic marker 10 in the vehicle-width direction at that first time point.

In the present embodiment, control unit 13 determines that time has reached the predicted first time point by using the distance traveled by work vehicle 11. Specifically, when the distance traveled by work vehicle 11 after magnetic marker 10 is detected at step S201 becomes a predetermined amount (5 meters, which is a space between sensor array 2 and inspection unit 15), it is determined that time has reached the above-described first time point when inspection unit 15 reaches the first inspection target point at step S202 (S205: first time point).

When inspection unit 15 becomes in a state of facing the first inspection target point (the laying point of magnetic marker 10 detected at step S201) (S205: first time point), control unit 13 outputs a control signal for operating inspection unit 15. This control signal includes information about the position of magnetic marker 10 in the vehicle-width direction predicted as described above.

Inspection unit 15 performs the second inspection in response to the control signal from control unit 13 (S206). Inspection unit 15 first selects one or two or more air nozzles 151 corresponding to the position of magnetic marker 10 in the vehicle-width direction indicated by the control signal, and then injects compressed air from the selected air nozzles 151 toward road surface 100S.

Inspection unit 15 processes taken-image data of magnetic marker 10 and sound data when injecting compressed air to determine whether magnetic marker 10 is peeling off. For example, inspection unit 15 determines whether peel-off occurs by detecting a flutter of a peeled-off portion as an image and/or detecting a sound of flutter. If peel-off occurs in magnetic marker 10, the result of inspection indicating that the laying state is faulty is outputted. If peel-off does not occur, the result of inspection indicating that the laying state is favorable is outputted.

### (Third Inspection)

The third inspection is an inspection regarding the arrangement of magnetic markers 10. As described above, the third inspection is not an inspection about detected magnetic marker 10, and is performed on magnetic marker 10 predicted to be detected in future. When magnetic marker 10 is detected by sensor array 2 (S201 in FIG. 7: YES), control unit 13 identifies the laying point of magnetic marker 10 adjacent ahead to that magnetic marker 10 as a second inspection target point (S202). This laying point is one example of the laying position of new magnetic marker 10 predicted to be detected in the future. As described above, in the configuration of the present embodiment, magnetic markers 10 are arranged with 2-meter pitches. When any magnetic marker 10 is detected, control unit 13 identifies that sensor array 2 is in a position directly above that magnetic marker 10 (one example of the relative position), and identifies a position two meters ahead as a second inspection target point. This inspection target point is one example of a point to be worked on in future.

Control unit 13 predicts, based on the steering angle and the vehicle speed, a second time point when sensor array 2 reaches the laying point (second inspection target point) of next magnetic marker 10 (S203). Specifically, with reference to the time point when magnetic marker 10 is detected at S201 of FIG. 7, control unit 13 predicts, based on the steering angle and the vehicle speed, a second time point when sensor array 2 reaches the laying point of next magnetic marker 10 two meters ahead (second inspection target point).

In the present embodiment, as with the above-described second inspection, by using the distance traveled by work vehicle 11, control unit 13 determines that time has reached the predicted second time point (S205). Specifically, when the distance traveled by work vehicle 11 after magnetic marker 10 is detected at step S201 reaches a predetermined amount (two meters, which is the pitch among magnetic markers 10), control unit 13 determines that time has reached the second time point when sensor array 2 reaches the second inspection target point (S205: second time point).

If time has reached the second time point (S205: second time point), control unit 13 performs the third inspection (S216). The third inspection is an inspection whether sensor array 2 has detected magnetic marker 10. When acquiring at the second time point from sensor array 2 the result indicating that magnetic marker 10 has been detected, control unit 13 determines that magnetic markers 10 are correctly arranged with predetermined pitches.

Here, distances traveled by work vehicle 11 after performance of the above-described first inspection and until the second inspection and the third inspection are performed are five meters and two meters, respectively. Therefore, with reference to the time point when any magnetic marker 10 is detected at step S201 (a time point when the first inspection is performed), the third inspection at step S216 is performed earlier than the second inspection at step S206.

When new magnetic marker 10 is detected by the third inspection, control unit 13 identifies new first and second inspection target points based on that magnetic marker 10. That is, after any magnetic marker 10 is first detected and the first inspection is performed and until the second inspection is performed, new first and second inspection target points are identified in accordance with the performance of the third inspection. Control unit 13 stores and manages, for each magnetic marker 10, data of the first and second inspection target points and the first and second time points, and so forth.

When one magnetic marker 10 is determined as favorable in all of the first inspection performed at step S204, the second inspection performed at step S206, and the third inspection performed at step S216 in FIG. 7, control unit 13 determines that that one magnetic marker 10 is favorable.

As described above, work system 1 of the present embodiment is a system in which work vehicle 11 automatically travels so as to go along magnetic markers 10 and performs inspection of magnetic markers 10 during its automatic traveling. In the work method by this work system 1, work vehicle 11, which is one example of the apparatus, performs inspection of magnetic markers 10 as automatically traveling along magnetic markers 10.

In the present embodiment, as inspections of magnetic marker 10 as one example of work, those regarding magnetic characteristics (first inspection), the laying state (second inspection), and the arrangement (third inspection) are exemplarily described. As an inspection of magnetic marker 10, a shape inspection may be performed, such as inspection for chipping. The shape inspection of magnetic marker 10 can be performed by, for example, processing a taken image of magnetic marker 10.

As a method of inspecting magnetic marker 10 for peel-off, in place of the exemplarily-described method of injecting compressed air, various methods can be thought. For example, magnetic marker 10 may be inspected for peel-off by using a stamp-shaped member with a plurality of fine air suction holes bored therein. When the stamp-shaped member being in an air suction state is pulled up from a state of being pressed onto magnetic marker 10, if peel-off is not present, all suction holes almost simultaneously become in an open state. On the other hand, if peel-off is present in magnetic marker 10, when the stamp-shaped member is pulled up, a peeled-off portion is suctioned and curled up. Here, the timing of becoming in an open state of the suction holes corresponding to the peeled-off portion is delayed, compared with the other suction holes. By detecting this delay, peel-off of magnetic marker 10 can be detected.

In the present embodiment, work vehicle 11 which can automatically travel is exemplarily described as one example of the apparatus. As the apparatus, a vehicle without having a driving wheel and to be towed by man power or another vehicle may be adopted. The vehicle speed can be detected from the rotation speed of the wheel, or the like. The course can be detected from a difference in rotation between the left and right wheels, the steering angle of the steered wheel, or the like. On a vehicle including sensor array 2, inspection unit 15, and so forth, the above-described (A) marker detection process and (C) marker inspection can be performed irrespective of whether the vehicle can self-travel, automatically travel, or the like.

As work to be conducted by work vehicle 11 as an apparatus, work of newly providing magnetic marker 10 as one example of the attachment configuring traveling road 1R may be conducted. For example, it is also preferable, after magnetic markers 10 are laid with 4-meter pitches, to lay magnetic marker 10 at a midpoint between adjacent magnetic markers 10 to form a traveling road where magnetic markers 10 are arranged with 2-meter pitches. By using work system 1 of the present embodiment, it is possible to efficiently conduct work of laying magnetic marker 10 at a midpoint between adjacent magnetic markers 10.

Work of magnetizing magnetic marker 10 determined in the first inspection of the present embodiment as being short of magnetic force may be conducted, thereby conducting work of improving the state of magnetic marker 10, which is one example of the attachment. To make this work enabled, a magnetizing unit which acts on magnetic marker 10 with a magnetic field for magnetization is preferably provided to work vehicle 11. Also, for example, at the first inspection, the magnetic polarity of magnetic marker 10 that can detected on a vehicle side may be identified and sequentially recorded on a storage device. In this case, a database of magnetic polarities of magnetic markers 10 laid along lane 100 can be constructed.

In addition to or in place of the first to third inspections of the present embodiment, work of identifying the laying position of magnetic marker 10 may be added. For example, if work vehicle 11 includes a position measuring apparatus, the absolute position of magnetic sensor C8 when magnetic marker 10 is detected can be identified. Based on the absolute position of magnetic sensor C8, a position shifted by the lateral shift amount when magnetic marker 10 is detected can be identified as the absolute position of magnetic marker 10. By sequentially recording the absolute positions of magnetic markers 10 identified in this manner on the storage device, a database of the absolute positions of magnetic markers 10 laid along lane 100 can be constructed.

Work system 1 can conduct work of preparation, maintenance, or management of road 1R forming a traveling road. For example, the work of inspecting magnetic marker 10 corresponds to work of maintenance and management. Also, for example, work of laying magnetic markers corresponds to preparation of road 1R. As work of maintenance of a road in association with magnetic markers, for example, there are work of magnetizing a magnetic marker with decreased magnetic force, and so forth. Also, as work of management of a road, there are work of measuring magnetic force of magnetic markers, work of measuring the laying positions of magnetic markers, and so forth.

As work of preparation of road 1R, there are various works for forming road 1R, such as work of newly laying a lane mark, work of providing curbstones, work of providing a guardrail, work of providing plants on a dividing strip, work of providing a traffic sign along road 1R, and work of paving a road surface. As work of maintenance of road 1R, there are work for appropriately taking measures when repair or cleaning is required, such as repairing a paved surface, repainting a lane mark with poor visibility, removing (cleaning out) rubbish from a road shoulder, and pruning plants, and so forth. As work of management of road 1R, there are work of inspecting whether the road is in a favorable state, such as inspecting a paved surface for a defect such as a crack or dent, inspecting visibility of a lane mark, and checking whether any foreign matter is present on the road, and so forth.

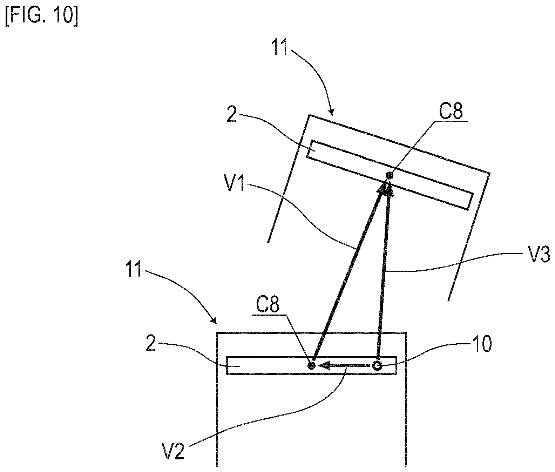

In the present embodiment, when magnetic marker 10 is detected, the lateral shift amount in the vehicle-width direction is measured as a relative position of the representative point of work vehicle 11 with respect to magnetic marker 10. When magnetic marker 10 is detected, magnetic marker 10 is positioned directly below sensor array 2, and therefore a positional shift (relative position) in the longitudinal direction is zero. In place of this, the relative position of work vehicle 11 when the positional shift in the longitudinal direction is not zero, that is, after passing over magnetic marker 10, may be identified. As in FIG. 10, movement vector V1 of work vehicle 11 after passing over magnetic marker 10 can be identified based on the time elapsed, vehicle speed, steering angle, and so forth. The relative position of work vehicle 11 with respect to magnetic marker 10 after passing over magnetic marker 10 can be identified as total vector V3 of vector V2 corresponding to the lateral shift amount when magnetic marker 10 is detected and movement vector V1. Based on total vector V3 as the relative position with respect to magnetic marker 10, a point to be worked on may be identified.

### (SECOND EMBODIMENT)

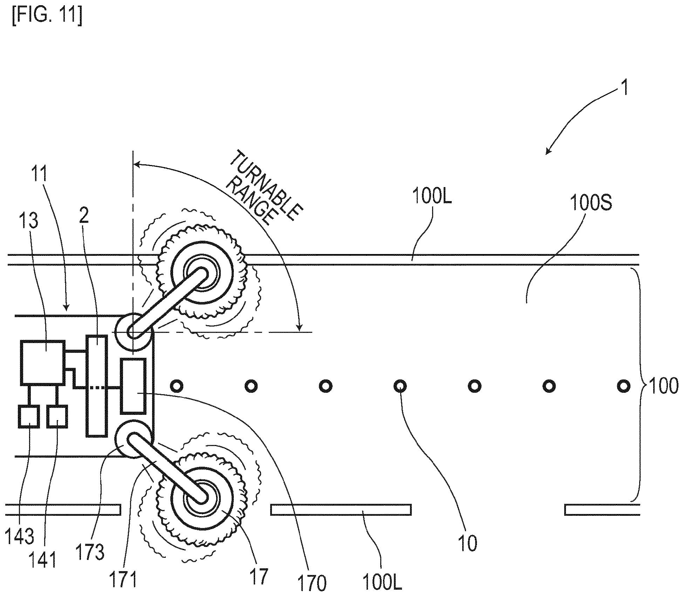

The present embodiment is an example in which the work detail is changed based on the work system of the first embodiment. The work detail of the first embodiment is inspection of magnetic marker 10. By contrast, the work detail of the present embodiment is cleaning for improving visibility of lane marks (white lines, division lines) 100L which divide the lane. Details of this are described with reference to FIG. 11.

As with the first embodiment, lane 100 as a work target by work system 1 of the present embodiment is an area divided by left and right lane marks 100L. Magnetic markers 10 are arranged with, for example, 2-meter pitches along the center of lane 100. Also, as with the first embodiment, work vehicle 11 automatically travels along lane 100 as detecting magnetic marker 10.

Work vehicle 11 of the present embodiment includes a pair of left and right rotating brushes 17 for cleaning lane marks 100L. Rotating brushes 17 are each provided at the tip of arm 171 attached to a front side of work vehicle 11. Arms 171 are attached to the vehicle body in a state of being turnable along road surface 100S. The turnable range of each arm 171 is, as depicted in FIG. 11, a range of approximately 90 degrees between a turning position of arm 171 along a forwarding direction and a turning position of arm 171 along the vehicle-width direction (outside). With arms 171 turning, the positions of rotating brushes 17 in the vehicle-width direction can be changed relatively to work vehicle 11. This allows lane marks 100L to be cleaned by rotating brushes 17 irrespective of the position of work vehicle 11 in lane 100 in the vehicle-width direction.

Work vehicle 11 includes, in addition to the electrical configuration of the first embodiment, motors 173 which turn arms 171 and motor control unit 170 which controls motors 173. Motor control unit 170 controls motors 173 in accordance with control information inputted from control unit 13. The control information from control unit 13 includes at least information about the lateral shift amount outputted from sensor array 2. Motor control unit 170 causes arms 171 to turn so that rotating brushes 171 is each positioned directly above lane mark 100L in accordance with the control information inputted from control unit 13 such as the lateral shift amount.

When work vehicle 11 is positioned in the middle of adjacent magnetic markers 10, as described with reference to FIG. 10, the relative position of work vehicle 11 with respect to detected magnetic marker 10 may be identified. By identifying a point to be worked on based on this relative position, the point to be worked on can be accurately identified even if the spacing between magnetic markers 10 is long.

In the present embodiment, cleaning lane marks 100L is exemplarily described as work. As work, various types of work can be thought, such as cleaning a road shoulder such as curbstones, cleaning guardrails, management of plants such as pruning and watering, and a hammering test of an RC structure such as the inner wall of a tunnel. Work regarding attachments (accessories) on road 1R provided along lane 100 is suitable for the work system of the present invention. Alternatively, in a work environment where work targets are arrayed, magnetic markers may be arranged along its arraying direction. In this case, it is possible to work by the work system 1 exemplarily described irrespective of whether the work environment is a road or inside a facility such as a factory.

Note that the other configurations and operations and effects are similar to those in the first embodiment.

In the foregoing, specific examples of the present invention are described in detail as in the embodiments, these specific examples merely disclose examples of technology included in the scope of the claims. Needless to say, the scope of the claims should not be restrictively construed based on the configuration, numerical values, and so forth of the specific examples. The scope of the claims includes technologies acquired by variously modifying, changing, or combining as appropriate the above-described specific examples by using known technologies, knowledge of a person skilled in the art, and so forth.

### REFERENCE SIGNS LIST

- 1: work system
- 1R: road (traveling road)
- 10: magnetic marker (attachment, accessory)
- 100: lane
- 100L: lane mark
- 100S: road surface
- 11: work vehicle (apparatus)
- 111: steered wheel
- 13: control unit (position identifying part, work point identifying part, control part)
- 15: inspection unit
- 17: rotating brush
- 171: arm
- 2: sensor array (magnetic measuring unit)
- 212: detection processing circuit
- Cn: magnetic sensor

## Claims

1. A work method for an apparatus which, as moving on a traveling road where a magnetic marker is laid, detects the magnetic marker to conduct work of preparation, maintenance, or management of the traveling road, wherein
a relative position of the apparatus with respect to the magnetic marker is identified,
based on the relative position, a point to be worked on by the apparatus is identified, and
at the point identified, the apparatus conducts work.

2. The work method in claim 1, wherein the apparatus is a vehicle having a steered wheel and capable of performing automatic traveling control including control of a steering angle indicating an orientation of the steered wheel,
the relative position includes at least a lateral shift amount with respect to the magnetic marker in a vehicle-width direction of the vehicle, and
the steering angle is determined by using the lateral shift amount to control the steered wheel to cause the vehicle to automatically travel.

3. The work method in claim 1 or 2, wherein the apparatus conducts at least any of work of newly providing an attachment configuring the traveling road, work of inspecting the attachment already provided, and work of improving a state of the attachment already provided.

4. The work method in claim 3, wherein the attachment is the magnetic marker.

5. The work method in claim 4, wherein the apparatus conducts at least any of work of identifying a laying position of the magnetic marker, measuring magnetism with which the magnetic marker acts, work of identifying magnetic polarity of the magnetic marker, and work of magnetizing the magnetic marker.

6. A work system including an apparatus which, as moving on a traveling road where a magnetic marker is laid, detects the magnetic marker, the apparatus conducting work of preparation, maintenance, or management of the traveling road, the system having:
a position identifying part which identifies a relative position of the apparatus with respect to the magnetic marker; and
a work point identifying part which identifies a point to be worked on by the apparatus based on the relative position, wherein
the apparatus is configured to conduct work at the point identified by the work point identifying part.

7. The work system in claim 6, wherein the apparatus is a vehicle having a steered wheel and capable of performing automatic traveling control including control of a steering angle indicating an orientation of the steered wheel,
the relative position includes at least a lateral shift amount with respect to the magnetic marker in a vehicle-width direction of the vehicle, and
the vehicle includes a control part which determines the steering angle by using the lateral shift amount to control the steered wheel to cause the vehicle to automatically travel.

8. The work system in claim 7, wherein the apparatus can conduct at least any of work of newly providing an attachment on the traveling road, work of inspecting the attachment already provided, and work of improving a state of the attachment already provided.

9. The work system in claim 8, wherein the attachment is the magnetic marker.

10. The work system in claim 9, wherein the apparatus is configured to be able to conduct at least any of work of identifying a laying position of the magnetic marker, work of measuring magnetism with which the magnetic marker acts, work of identifying magnetic polarity of the magnetic marker, and work of magnetizing the magnetic marker.

11. The work system in claim 9, wherein the apparatus is configured to identify, when the magnetic marker is detected, a laying position of a new magnetic marker predicted to be detected in future and identify the laying position as a point to be worked on in future.

12. The work system in claim 9, wherein the apparatus has an air nozzle which blows air to the magnetic marker and a camera which takes an image of the magnetic marker, and includes a processing part which determines whether the magnetic marker is peeling off from a road surface by processing data of the taken image acquired by the camera while air is being blown to the magnetic marker.

13. The work system in claim 9 or 12, wherein the apparatus has an air nozzle which blows air to the magnetic marker and a microphone which collects sounds generated from the magnetic marker, and includes a processing part which determines whether the magnetic marker is peeling off from a road surface by processing sound data acquired by the microphone while air is being blown to the magnetic marker.

14. The work system in claim 7, wherein the apparatus can conduct work of inspecting the attachment already provided, and includes a position measuring circuit which measures a position and a circuit which records a result of conducting the work of inspecting the attachment as being linked to the position acquired by the position measuring circuit.
